# EUROPÄISCHE PATENTSCHRIFT

(11) **EP 3 875 990 B1**
(45) Veröffentlichungstag und Bekanntmachung des Hinweises auf die Patenterteilung: **16.08.2023**
(21) Anmeldenummer: 21159835.4
(22) Anmeldetag: 01.03.2021
(51) Int. Cl.: G01S 17/89, B66F 9/075

(54) **SYSTEM ZUR INSPEKTION EINES LAGERS**
BEARING INSPECTION SYSTEM
SYSTÈME D'INSPECTION D'UN DÉPÔT

(30) Priorität: 04.03.2020 DE 102020105804
(43) Veröffentlichungstag der Anmeldung: 08.09.2021
(73) Patentinhaber: Jungheinrich Aktiengesellschaft, 22047 Hamburg (DE)
(72) Erfinder: Bistry, Hannes, 25421 Pinneberg (DE); Wetegrove, Ralf, 22850 Norderstedt (DE); Richter, Maximilian, 22417 Hamburg (DE)
(74) Vertreter: Weickmann & Weickmann PartmbB

(56) Entgegenhaltungen:
- WO-A1-2019/141929
- US-A1- 2018 155 169
- US-B2- 8 655 588
- DANIEL HUBER ET AL: "Using laser scanners for modeling and analysis in architecture, engineering, and construction", INFORMATION SCIENCES AND SYSTEMS (CISS), 2010 44TH ANNUAL CONFERENCE ON, IEEE, PISCATAWAY, NJ, USA, 17. März 2010 (2010-03-17), Seiten 1-6, XP031676435, ISBN: 978-1-4244-7416-5

## Beschreibung

Die vorliegende Erfindung betrifft ein System zur Inspektion eines Lagers, ein Flurförderzeug umfassend ein solches System und ein Verfahren zur Inspektion eines Lagers mit einem solchen System.

Aus Sicherheitsgründen sind Lagerbetreiber in vielen Ländern gesetzlich verpflichtet, Lagereinrichtungen, u.a. Regalsysteme, regelmäßig zu prüfen, wobei eine Durchführung der Regalprüfung in Deutschland nach dem Arbeitsschutzgesetz und der DIN EN 15635 spätestens alle 12 Monate erfolgen sollte. Eine frühzeitige Erkennung von Schäden oder Unregelmäßigkeiten an Regalsystemen hilft nicht nur dabei, folgenschwere Unfälle zu vermeiden, sondern trägt auch dazu bei, Reparaturkosten zu verringern sowie Anlagenstillstände zu minimieren. Zudem ist es insbesondere für automatisierte Lagersysteme von Bedeutung, Waren an richtigen Lagerplätzen korrekt einzulagern oder eine falsche Einlagerung frühzeitig zu erkennen und ggf. zu korrigieren, um Logistikfehler oder Störungen in den Abläufen zu vermeiden, damit die entsprechenden Automatikanlagen zuverlässig arbeiten können.

Eine Regalprüfung wird meist durch eine fachkundige Person durchgeführt, wobei die fachkundige Person üblicherweise durch eine Sichtprüfung den Zustand der einzelnen Regalfächer (belegt, unbelegt), die Kontur der einzelnen eingelagerten Waren und Barcodes der Waren mit den entsprechenden Daten eines Lagerverwaltungssystem (WMS) abgleicht und ggf. Positionierungsfehler der Waren im Regal (schief, schräg, zu weit links oder rechts), Verformungen der Waren durch z.B. eine nachgebende Folienwicklung sowie Regalschäden (Knick in einem Träger, Trägerwinkel schief) detektiert. Der geprüfte Lagerzustand wird dokumentiert, wobei bei einer Erkennung der oben genannten Unregelmäßigkeiten oder Schäden entsprechende Maßnahmen ergriffen werden, um einen ordnungsgemäßen Lagerzustand wiederherzustellen.

Eine manuelle Prüfung wie oben beschrieben hat jedoch einerseits einen hohen Personalaufwand, vor allem für Hochregallager, welche Regale mit einer Höhe bis über 40 Meter umfassen können, wobei andererseits Automatiksysteme für den Überprüfungszeitraum aus Sicherheitsgründen unter Umständen nicht betrieben werden dürfen.

Aus der DE 10 2011 051 204 B3 ist ein Verfahren zur automatisierten Inspektion von Lagereinrichtungen mit einer speziellen Sonde bekannt, welche die Form eines im Lager verwendeten Lagerhilfsmittels, wie beispielsweise einer Palette, aufweist und optische und visuelle Sensoren zur Bestimmung des Abstands von sich selbst zur Tragkonstruktion der Lagereinrichtung sowie zur Vermessung von Parametern des Umfelds umfasst. Für die Überprüfung muss die Sonde mittels eines Lagerguttransportmittels, wie beispielsweise eines Staplers, bewegt und ggf. in einzelne Lagerfächer eingeführt werden. Somit ist für die Überprüfung entweder ein Lagerguttransportmittel oder ein Lagerfach besetzt, welche während der Überprüfungszeit für normale Logistikaufträge nicht verwendet werden können.

Aus der DE 10 2016 122 485 A1 ist ferner ein Verfahren zur Bereitstellung der Position von Lagerplätzen in einem Lager mit einem Flurförderzeug bekannt, das ein Ortungssystem und mindestens eine seitliche 3D-Kamera aufweist, deren Blickrichtung quer zu einer Hauptfahrrichtung ausgerichtet ist. Mit der seitlichen 3D-Kamera können Bilddaten von Lagerplätzen sowie die Regalstruktur in einem Sichtbereich der Kamera auf einer Seite des Flurförderzeugs erfasst werden. Eine Lichtlaufzeitmessung-basierte 3D-Kamera weist jedoch üblicherweise nur einen eingeschränkten Sichtbereich mit einem Winkel von circa 60° auf. Um Regale auf beiden Seiten des Flurförderzeugs gleichzeitig zu erfassen, müssen daher mindestens zwei 3D-Kameras vorhanden sein, die jeweils an einer Seite des Flurförderzeugs anzubringen sind. Zudem ist es kaum möglich, mit einer seitlichen 3D-Kamera alle Lagerplätze eines Regals mit mehreren Etagen durch eine Messfahrt auf einmal zu erfassen. Es kann daher vorkommen, dass ein großer Regalplatz nur teilweise erfasst wird. Eine Erfassung mit Kompensation einer Mastneigung des Flurförderzeugs ist ebenfalls nicht möglich.

Bei automatisierten fahrerlosen Flurförderzeugen ist es neben der Erkennung von Lagerunregelmäßigkeiten oder -schäden zudem besonders wichtig, dass Positionierungsfehler bei Einlagerungs- und Auslagerungsvorgängen rechtzeitig erkannt und ggf. korrigiert werden können. Aus der US2018155169A1 ist ein Verfahren zur Erfassung von dreidimensionalen Daten der Umgebung mittels eines Laserscanners bekannt, wobei der Laserscanner an der Gabel eines Gabelstaplers fest angebracht ist und die Umgebung vor der Gabel in einer horizontalen Ebene abtastet. Die dreidimensionalen Daten der Umgebung werden dadurch erzeugt, dass sich der Laserscanner mit der Gabel bei der Abtastung der Umgebung in einer vertikalen Richtung auf und ab bewegt.

Weiterhin ist aus der US 8 655 588 B2 ein System bekannt, in welchem ein planarer Laserscanner an einer Seite eines Flurförderzeugs angebracht ist, wobei der planare Laserscanner die Umgebung in einer horizontalen Ebene abtastet.

Es ist eine Aufgabe der vorliegenden Erfindung, gemäß den nachfolgenden Aspekten eine verbesserte Lösung in Bezug auf den Stand der Technik für die Inspektion eines Lagers, insbesondere eines automatisierten Schmalgang-Hochregallagers, bereitzustellen, um einen reduzierten Personalaufwand, eine verbesserte oder alternative Positionierungsansteuerung bei Einlagerungs- und Auslagerungsvorgängen und eine frühzeitige Erkennung von Schäden sowie Unregelmäßigkeiten des Lagers zu ermöglichen.

Die Erfindung wird durch ein System zur Inspektion eines Lagers gemäß Anspruch 1 definiert.

Laserscanner sind elektro-optische Sensoren, die ihre Umgebung mittels eines schnell rotierenden Laser-Messstrahls abtasten, wobei die Messung auf dem sogenannten Time-of-Flight-Verfahren (ToF) basiert. Ein marktüblicher Laserscanner ist meist dafür eingerichtet, die Umgebung in einer Ebene abzutasten, wobei ein gepulster Laserstrahl mithilfe eines rotierenden Spiegels in verschiedene Richtungen in der Ebene abgelenkt wird. Im Vergleich zu einer ToF-Kamera hat ein Laserscanner einen wesentlich größeren Abtastwinkel, wobei die Abtastung bei einem marktüblichen Laserscanner in einem Sektor von bis zu 270° stattfinden kann.

Erfindungsgemäß ist der Laserscanner derart an dem Flurförderzeug befestigbar, dass er seine Scanebene im Wesentlichen senkrecht zur Hauptfahrtrichtung des Flurförderzeugs aufweist. Somit kann die Umgebung auf wenigstens einer Seite, vorzugsweise beiden Seiten des Flurförderzeugs während der Messfahrt abgetastet werden.

Der Laserscanner scannt mit einer vorbestimmten Scanfrequenz. Dabei wird fortlaufend jeweils nach einem bestimmten Winkelschritt ein Laserpuls ausgesendet und damit eine Einzelmessung ausgelöst. Die Daten der Einzelmessungen werden an die Recheneinheit weitergeleitet, wobei die Recheneinheit dafür eingerichtet ist, dreidimensionale Daten der Umgebung, nämlich eine sogenannte Punktewolke als eine Gesamtheit der Einzelmessungen, zu konstruieren.

Da die Scanebene normal zur Hauptfahrtrichtung des Flurförderzeugs steht, werden Daten über die räumliche Position bzw. die Bewegungsrichtung des Laserscanners benötigt, um dreidimensionale Daten der Umgebung zu konstruieren. Da der Laserscanner an dem Flurförderzeug fest anbringbar ist, ergibt sich die räumliche Position des Laserscanners aus der räumlichen Position des Flurförderzeugs, wobei die Bewegungsrichtung des Laserscanners mit der Fahrtrichtung des Flurförderzeugs übereinstimmt. Erfindungsgemäß ist die Recheneinheit daher ferner dafür eingerichtet, Daten über die absolute Position und/oder die relative Positionsänderung des Flurförderzeugs, oder Daten, aus denen sich eine oder mehrere dieser Größen herleiten lassen, zu erhalten. Die relative Positionsänderung des Flurförderzeugs kann nicht nur dafür verwendet werden, die absolute räumliche Position des Flurförderzeugs zu ermitteln, sondern kann auch zur Bestimmung der Bewegungsrichtung des Flurförderzeugs verwendet werden. Die absolute Position und/oder die relative Positionsänderung des Flurförderzeugs können durch vorhandene oder zusätzliche Sensorsysteme für die Lokalisierung des Flurförderzeugs, wie beispielsweise optische Sensoren, RFID-Sensoren oder andere Sensoren zu Lokalisierungs- oder Trackingzwecken direkt erfasst werden. Alternativ oder ergänzend kann die Recheneinheit Daten erhalten, aus denen die Recheneinheit die absolute Position und/oder die relative Positionsänderung des Flurförderzeugs herleiten kann. Solche Daten können beispielsweise Odometriedaten des Flurförderzeugs umfassen, welche nachfolgend näher erläutert werden.

Die vertikale Auflösung der Punktewolke wird durch die Winkelauflösung des Laserscanners sowie den Abstand zwischen dem Laserscanner und einer abzutastenden Objektoberfläche, wie beispielsweise einer Regalfront, bestimmt, wobei die horizontale Auflösung durch die Fahrgeschwindigkeit des Flurförderzeugs und die Abtastfrequenz des Laserscanners bestimmt wird.

Im Gegensatz zu einer bewegbaren Sonde ist der Laserscanner derart fest an dem Flurförderzeug anzubringen, dass er nicht gesondert für eine Überprüfung von dem Flurförderzeug mit dessen Lasttragvorrichtung getragen werden muss, so dass eine Überprüfung des Lagers mit der vorliegenden Erfindung sowohl während der Abarbeitung von Transportaufträgen als auch in Zeiten mit einer niedrigen Arbeitsauslastung stattfinden kann.

Im Vergleich zu einer manuellen Sichtprüfung des Lagers kann der Personalaufwand mit der Erfindung deutlich reduziert werden. Zudem ist eine frühzeitige Erkennung von Schäden und Unregelmäßigkeiten des Lagers möglich, da die Überprüfung mit dem System gemäß der Erfindung auch während der Abarbeitung von Transportaufträgen und somit viel häufiger durchgeführt werden kann. Zudem können Einlagerungs- oder Auslagerungsvorgänge aufgrund der erzeugten dreidimensionalen Daten eines Lagerplatzes oder -faches unterstützt werden, wobei Positionierungsfehler oder -abweichungen rechtzeitig erkannt und ggf. korrigiert werden können, sodass die Genauigkeit der Einlagerungs- oder Auslagerungsvorgänge erhöht werden kann. Somit kann nicht nur die Arbeitssicherheit eines automatisierten Lagers verbessert werden, sondern auch der benötigte Sicherheitsabstand zwischen zwei benachbarten eingelagerten Ladungshilfsmitteln in einem automatisierten Lager verringert werden, sodass sich auch Bestandslager ohne aufwendige Umbauten automatisieren lassen.

Wie bereits erwähnt ist die Recheneinheit in einer bevorzugten Ausführungsform dafür eingerichtet, Odometriedaten des Flurförderzeugs zu erhalten, wobei die Daten über die absolute Position und/oder die relative Positionsänderung des Flurförderzeugs aus den Odometriedaten des Flurförderzeugs herzuleiten sind. Odometriedaten eines Fahrzeugs beinhalten Positions- und Orientierungsdaten des Fahrzeugs, die mittels seines Vortriebsystems ermittelt werden. Zur Ermittlung der Odometriedaten eines Fahrzeugs werden in der Regel Messgrößen aus wenigstens einem Raddrehzahlsensor im Fahrwerk, einem Gierratensensor in beispielsweise einem Antiblockiersystem (ABS) oder einem Fahrdynamikregler (ESP) und einem Lenkungssensor für eine Lenkradwinkelmessung verwendet, wobei für spurgeführte Fahrzeuge die Messgrößen aus dem Raddrehzahlsensor auch alleine ausreichen können.

In einer weiteren bevorzugten Ausführungsform weist der Laserscanner Abtastrichtungen auf, die die beiden horizontalen Richtungen und die vertikale Richtung nach oben enthalten. Somit weist der Laserscanner einen Abtastwinkel von wenigstens 180° auf, so dass Regaleinrichtungen auf beiden Seiten des Flurförderzeugs mit einer Messfahrt gleichzeitig erfasst werden können. Für Hochregallager ist es auch von Bedeutung, dass der Laserstrahl auch Lagerplätze und Lagerstrukturen in den oberen Etagen der Hochregale erreichen kann. Deswegen ist der Laserscanner vorzugsweise derart eingerichtet, dass der Abtastbereich auch die Umgebung oberhalb des Laserscanners umfassen kann. Zudem ist der Laserscanner vorzugsweise dafür eingerichtet, den Boden der Regaleinrichtungen auf beiden Seiten abzutasten. Somit kann die gesamte Regalfront eines Regals mit einer Messfahrt erfasst werden.

In einer weiteren bevorzugten Ausführungsform ist die Recheneinheit ferner dafür eingerichtet, einzelne Lagerelemente aus den konstruierten dreidimensionalen Daten der Umgebung zu detektieren. Lagerelemente im Rahmen dieser Erfindung beziehen sich auf alle möglichen Logistikelemente oder -einheiten, die entweder für Transportaufträge oder für die Lagerung von Waren in einem Lager verwendet oder benötigt werden. Dazu gehören Lagergüter wie Waren oder Ladeeinheiten aus zusammengebündelten Waren oder Päckchen, Lagerhilfsmittel wie Paletten oder Behälter, Lagerplätze oder -fächer, Regale oder Regalelemente wie Vertikalträger oder Horizontalträger, etc.

Die Recheneinheit ist vorzugsweise dafür eingerichtet, durch eine Bildverarbeitung verschiedene Lagerelemente aus einer konstruierten Punktewolke zu erkennen und darauf basierend dreidimensionale Daten der einzelnen erkannten Lagerelemente zu ermitteln. Die Bildverarbeitung kann entweder durch eine Segmentierung der Punktewolke und einen anschließenden Abgleich der einzelnen segmentierten Teile mit vordefinierten Mustern oder Regeln erfolgen oder sich auf ein Verfahren mit künstlicher Intelligenz mit Lernfähigkeit stützen, wobei die Recheneinheit ständig mit Daten trainiert werden kann, um sich an neue Umgebungen anpassen zu können.

Vorzugsweise ist die Recheneinheit ferner dafür eingerichtet, Daten aus einem Lagerverwaltungssystem zu empfangen. Ein Lagerverwaltungssystem ist ein softwarebasiertes System, das die Steuerung der Lagerprozesse verwaltet. Je nach Umfang können verschiedene Daten in einem Lagerverwaltungssystem abgespeichert werden, die bei Bedarf von externen Anlagen abgefragt werden können. Dazu gehören Daten in Bezug auf die Auftragsverwaltung, die Logistikprozessverwaltung, wie die Verwaltung von Einlagerungs-, Auslagerungs- oder Umlagerungsprozessen, die Bestandsverwaltung, die Stammdatenverwaltung etc. Im Rahmen der Erfindung können die Daten in dem Lagerverwaltungssystem für verschiedene Zwecke verwendet werden. Beispielsweise kann die Recheneinheit aufgrund der Daten eines Umlagerungsauftrags die räumliche Position des Laserscanners mitbestimmen, oder die konstruierten Daten der Umgebung mit den im Lagerverwaltungssystem abgelegten Bestandsdaten abgleichen, um den Bestand eines Lagers zu überprüfen.

Ferner können Identifikationsnummern der einzelnen Lagerelemente, wie Regaleinrichtungen, Lagerplätze oder Ladungsgüter, in dem Lagerverwaltungssystem hinterlegt sein, sodass Informationen in Bezug auf die erfassten Lagerelemente durch die Kombination mit weiteren Identifikationssensoren, wie beispielsweise Barcode- oder RFID-Lesegeräten, die an dem Flurförderzeug angebracht sind, von dem Lagerverwaltungssystem aufgerufen und mit den konstruierten Daten der Lagerelemente abgeglichen werden können.

In einer besonders bevorzugten Ausführungsform ist die Recheneinheit ferner dafür eingerichtet, einen Lagerzustand auf Basis eines Abgleichs der dreidimensionalen Daten der einzelnen detektierten Lagerelemente mit entsprechenden Daten aus dem Lagerverwaltungssystem zu überprüfen. Beispielsweise kann wie oben erwähnt die Anzahl der detektierten eingelagerten Waren oder die Anzahl der noch zur Verfügung stehenden Lagerplätze mit den im Lagerverwaltungssystem abgelegten entsprechenden Anzahlen abgeglichen werden. Die Recheneinheit kann zudem Positionen, Abmessungen der erkannten Lagerelemente und/oder einen Abstand zwischen zwei benachbarten Lagerelementen mit den entsprechenden Stammdaten aus dem Lagerverwaltungssystem abgleichen.

Vorzugsweise ist die Recheneinheit ferner dafür eingerichtet, einen Lagerzustand auf Basis eines Abgleichs der dreidimensionalen Daten der einzelnen detektierten Lagerelemente mit vordefinierten Referenzdaten zu überprüfen. Die Referenzdaten können beispielsweise die nach Normen definierten spezifischen Vorschriftsdaten sein, wie z.B. die erlaubte Durchbiegung eines Regalträgers, der erlaubte Abstand zwischen zwei benachbarten in einem Hochregallager eingelagerten Paletten, oder die erlaubte Abmessung eines Ladeguts, usw. Die Referenzdaten können entweder als Stammdaten in dem Lagerverwaltungssystem oder lokal in einem Speicher der Recheneinheit hinterlegt sein. Eine Hinterlegung der Daten in einem anderen externen Speicher oder in einer Cloud ist ebenfalls möglich.

Durch den Abgleich der dreidimensionalen Daten der einzelnen detektierten Lagerelemente mit den im Lagerverwaltungssystem oder anderweitig abgespeicherten Daten kann die Recheneinheit gegebenenfalls Unregelmäßigkeiten des Lagers und/oder Schäden der einzelnen Lagerelemente erkennen.

Vorzugsweise ist die Recheneinheit ferner dafür eingerichtet, den Lagerzustand zu dokumentieren und/oder Anweisungen auf Basis des Lagerzustands auszugeben. Die Recheneinheit kann vorzugsweise eine elektronische Datei mit Einzelheiten der Lagerüberprüfung erzeugen. Bei Erkennung einer Unregelmäßigkeit oder eines Schadens des Lagers kann die Recheneinheit eine Anweisung ausgeben, um ein manuelles oder automatisches Wiederherstellen des Lagerzustands zu veranlassen. Beispielsweise kann eine automatische Umlagerung einer Ladung mit einem automatisierten Flurförderzeug veranlasst werden, falls die Recheneinheit erkannt hat, dass eine Palette in ein falsches Lagerfach eingelagert worden ist.

Gemäß einem zweiten Aspekt betrifft die Erfindung ein Flurförderzeug, umfassend ein erfindungsgemäßes System. Das System nach dem ersten Aspekt der Erfindung dient vorzugsweise als eine Erweiterung des Flurförderzeugs, wobei sich die Vorteile des Flurförderzeugs aus den Vorteilen des Systems ergeben.

In einer bevorzugten Ausführungsform nach dem zweiten Aspekt der Erfindung ist das Flurförderzeug ein spurgeführtes Flurförderzeug. Um die Effizienz und die Transparenz von Logistikprozessen zu steigern, werden heutzutage zunehmend automatisierte Lagersysteme eingesetzt, wobei ein automatisiertes Flurförderzeug das Herzstück eines automatisierten Lagersystems ist, welches dafür eingerichtet ist, ohne manuellen Eingriff oder mit einem deutlich reduzierten manuellen Eingriff entlang einer vordefinierten Spur zu fahren und Logistikprozesse, wie beispielsweise eine Einlagerung, eine Auslagerung oder eine Umlagerung, automatisch durchzuführen. Der Einsatz des Systems nach dem ersten Aspekt der Erfindung ist insbesondere für ein spurgeführtes Flurförderzeug vorteilhaft, da die Durchführung einer Lagerinspektion dadurch komplett automatisch erfolgen kann. Zudem wird die Sicherheit eines damit verbundenen automatisierten Lagers dadurch gesteigert, dass sich die Genauigkeit der automatisierten Logistikvorgänge durch die konstruierten dreidimensionalen Daten der Umgebung erhöhen kann. Da die Fahrspur bereits vordefiniert ist, können die Odometriedaten des Flurförderzeugs alleine auf Basis der Messdaten von Raddrehzahlsensoren ermittelt werden.

In einer weiteren bevorzugten Ausführungsform nach dem zweiten Aspekt der Erfindung umfasst das Flurförderzeug ein Hubgerüst, wobei der Laserscanner an einem Anbauteil des Flurförderzeugs fest angebracht ist, der direkt oder indirekt beweglich mit dem Hubgerüst verbunden ist, wobei die Höhe des Laserscanners in Bezug auf den Fahruntergrund mit einer Arbeitsfunktion des Flurförderzeugs einstellbar ist.

Das Hubgerüst ist das Kernstück eines Staplers, welches dafür eingerichtet, eine Arbeitsfunktion wie ein Heben oder ein Senken einer Last durchzuführen, wobei dem Hubgerüst eine Mehrzahl von Anbauteilen zugeordnet ist, welche an dem Hubgerüst mit einer Arbeitsfunktion auf- und abwärts bewegbar sind. Zudem kann die Arbeitsfunktion auch eine Mastneigefunktion umfassen, durch welche das gesamte Hubgerüst um einen durch die Arbeitsfunktion definierten Winkel geneigt werden kann. Somit ist die relative Position des Lasersensors in Bezug auf den Fahrzeugkörper des Staplers durch das Anbringen an einem der bewegbaren Anbauteile des Staplers ebenfalls mittels einer Arbeitsfunktion des Staplers einstellbar. Die relative Position des Laserscanners in Bezug auf den Fahrzeugkörper des Staplers kann gegebenenfalls durch eine Zusatzfunktion der Arbeitsfunktion des Staplers ermittelt werden, ohne dass eine gesonderte Messung durchgeführt werden muss, was alternativ jedoch selbstverständlich ebenfalls möglich wäre.

Das Flurförderzeug ist vorzugsweise ein Hochregalstapler, welcher einen Fahrerplatz mit einem Fahrerschutzdach und/oder eine seitlich quer zur Geradeausfahrrichtung des Staplers hin und her bewegbare Lasttragvorrichtung umfasst, wobei der Laserscanner vorzugsweise an dem Fahrerschutzdach oder an der Lasttragvorrichtung fest angebracht ist. Der Hochregalstapler ist vorzugsweise dafür eingerichtet, in einem Schmalgang zwischen Regalen eines Hochregallagers eine Ladung in ein Regal einzulagern oder aus einem Regal auszulagern und umfasst vorzugsweise ein mehrteilig teleskopisch ausfahrbares Hubgerüst, welchem der Fahrerplatz mit dem Fahrerschutzdach und/oder die schwenkbare Lasttragvorrichtung zugeordnet ist, wobei ein Fahrersitz bei einem automatisierten Hochregalstapler nicht unbedingt vorhanden sein muss. Somit ist die relative Position des Laserscanners in Bezug auf den Körper des Hochregalstaplers mit einer Arbeitsfunktion des Hochregalstaplers einstellbar. Zudem weisen sowohl das Fahrerschutzdach als auch die Lasttragvorrichtung Stellen auf, an welchen die Sicht des Laserscanners sowohl auf die linke als auch auf die rechte Regalebene möglich ist und keine Beeinträchtigung der Arbeitsfunktion gegeben ist.

Mit dem integrierten System zur Inspektion des Lagers nach dem ersten Aspekt der Erfindung kann die Ablaufsteuerung des Schmalgang-Hochregalstaplers optimiert werden, sodass sich mehrere Vorteile ergeben: Der benötigte Sicherheitsabstand zwischen zwei benachbarten eingelagerten Ladungshilfsmitteln in einem Hochregallager, das mit einem automatisierten Hochregalstapler bedient wird, kann von derzeit 100 mm auf 75 mm verringert werden. Hierdurch lassen sich auch Bestandslager ohne aufwendige Umbauten automatisieren und optimieren. Ein Positionierungsfehler z.B. wegen Bodenunebenheiten oder Abweichungen der Regalstrukturen kann während der Durchführung eines Transportauftrags ausgeglichen werden. Ein vorheriges Einlernen aller Regalfächer ist dadurch nicht mehr notwendig, was den Einrichtungsaufwand für ein Hochregallager stark reduzieren kann. Zudem werden, wie bereits erwähnt, Unregelmäßigkeiten oder Schäden eines Hochregallagers hierdurch frühzeitig erkannt, so dass die Arbeitssicherheit und die Logistikeffizienz erhöht werden können.

In einem dritten Aspekt betrifft die vorliegende Erfindung ein Verfahren zur Inspektion eines Lagers mittels eines erfindungsgemäßen Systems, wobei das System gegebenenfalls einem erfindungsgemäßen Flurförderzeug zugeordnet ist, umfassend: Abtasten der Umgebung und Erzeugen der Abtastdaten; Erfassen von Daten über die absolute Position und/oder die relative Positionsänderung des Flurförderzeugs, oder Daten, aus denen sich eine oder mehrere dieser Größen herleiten lassen; Konstruieren von dreidimensionalen Daten der Umgebung auf Basis der Abtastdaten sowie der Odometriedaten des Flurförderzeugs. Die Vorteile des Verfahrens entsprechen den Vorteilen des Systems nach dem ersten Aspekt der Erfindung.

Vorzugsweise umfasst das Verfahren ferner: Erfassen von Odometriedaten des Flurförderzeugs, wobei die Daten über die absolute Position und/oder die relative Positionsänderung des Flurförderzeugs aus den Odometriedaten des Flurförderzeugs herzuleiten sind.

In einer bevorzugten Ausführungsform nach dem dritten Aspekt der Erfindung umfasst das Verfahren ferner ein automatisches Aktivieren des Systems bei Erkennung eines Referenzpunkts. Beispielweise kann das System zur Inspektion eines Schmalgang-Hochregallagers, das einem Hochregalstapler zugeordnet ist, beim Einfahren des Hochregalstaplers in einen Schmalgang des Hochregallagers automatisch aktiviert werden, sofern ein an dem Hochregalstapler angebrachtes Lesegerät einen Referenzpunkt am Eingangsbereich des Schmalgangs erfasst hat, wobei der Referenzpunkt beispielsweise durch einen an einer Regalseite angebrachten Barcode oder einen in den Boden eingelassenen RFID-Transponder gekennzeichnet werden kann. Beim Verlassen eines Schmalgangs kann das System in analoger Weise wieder ausgeschaltet werden.

Vorzugsweise umfasst das Verfahren ferner ein Detektieren der momentanen räumlichen Position des Laserscanners, beispielsweise auf Grundlage von extern eingegebenen Daten und/oder von durch den Laserscanner erfassten Referenzpunkten, wobei das Verfahren ferner auf Basis der räumlichen Position des Laserscanners dreidimensionale Daten der Umgebung konstruiert. Obwohl der Laserscanner fest an dem Flurförderzeug angebracht ist, kann wie gesagt die relative Position des Laserscanners in Bezug auf den Körper des Flurförderzeugs mittels einer Arbeitsfunktion des Flurförderzeugs geändert werden, wobei die Arbeitsfunktion ein Heben einer Last zu einer bestimmten Höhe, ein Senken einer Last zu einer bestimmten Höhe, ein Neigen des Hubgerüsts des Flurförderzeugs mit einem bestimmten Neigungswinkel, eine Seitenschubfunktion der Lastaufnahmemittel des Flurförderzeugs und/oder eine Schwenkung der Lastaufnahmemittel des Flurförderzeugs umfassen kann. Die extern eingegebenen Daten umfassen beispielsweise Daten aus einem Lagerverwaltungssystem, die die Arbeitsfunktion genau definieren. Zudem kann die externe Umgebung die räumliche Position des Laserscanners ebenfalls beeinflussen, wie beispielsweise in Form von Bodenunebenheiten, die mittels vorhandener oder zusätzlicher Sensoren erfasst werden können. Zusätzlich oder alternativ können auch Referenzpunkte, wie z.B. ein Barcode, ein RFID-Transponder oder ein Bildmarker, in der Umgebung eingerichtet werden, die bestimmte räumliche Informationen umfassen oder darstellen, wobei die Referenzpunkte entweder von dem Laserscanner oder von anderen Sensoren erfasst werden und die räumliche Position des Laserscanners ebenfalls mitbestimmen können.

In einer bevorzugten Ausführungsform nach dem dritten Aspekt der Erfindung umfasst das Verfahren ferner ein Detektieren einzelner Lagerelemente aus den konstruierten dreidimensionalen Daten der Umgebung.

In einer weiteren bevorzugten Ausführungsform nach dem dritten Aspekt der Erfindung umfasst das Verfahren ferner ein Empfangen von Daten aus einem Lagerverwaltungssystem.

Vorzugsweise umfasst das Verfahren nach dem dritten Aspekt der Erfindung ferner ein Überprüfen eines Lagerzustands auf Basis eines Abgleichs der dreidimensionalen Daten der einzelnen detektierten Lagerelemente mit entsprechenden Daten aus dem Lagerverwaltungssystem.

In einer weiteren bevorzugten Ausführungsform umfasst das Verfahren ferner ein Überprüfen eines Lagerzustands auf Basis eines Abgleichs der dreidimensionalen Daten der einzelnen detektierten Lagerelemente mit vordefinierten Referenzdaten.

Das Verfahren umfasst vorzugsweise ferner ein Erkennen von Schäden und Unregelmäßigkeiten des Lagerzustands.

In einer weiteren bevorzugten Ausführungsform umfasst das Verfahren ferner ein Ausgeben von Anweisungen auf Basis des Lagerzustands und ggf. Wiederherstellen eines ordnungsgemäßen Lagerzustands, wobei das Wiederherstellen des Lagerzustands entweder automatisch oder manuell erfolgen kann.

Wie bereits erwähnt, kann das Verfahren sowohl während der Abarbeitung von Transportaufträgen als auch in Zeiten mit einer niedrigen Arbeitsauslastung in dedizierten Fahrten stattfinden. In einer bevorzugten Ausführungsform wird das Verfahren während eines Einlagerungs- oder Auslagerungsvorgangs durchgeführt. Somit kann das Verfahren verwendet werden, um den Einlagerungs- oder Auslagerungsvorgang zu unterstützen. Der Einlagerungs- oder Auslagerungsvorgang kann mit dem Verfahren in einem zweistufigen Prozess erfolgen, wobei das Flurförderzeug zunächst vorwärts oder rückwärts an einem Zielregalfach vorbeifährt und somit dreidimensionalen Daten des Regalfaches und/oder entsprechender Lagerelemente in Bezug auf das Regalfach, wie z.B. eines Regalträgers, erfasst, und dann erst eine Einlagerung oder Auslagerung ggf. mit Korrektur der Positionierung der Lastaufnahmemittel des Flurförderzeugs durchführt. Somit kann sowohl die Arbeitssicherheit als auch die Genauigkeit der Positionierungsansteuerung eines automatisierten Flurförderzeugs bei den Einlagerungs- und Auslagerungsvorgängen deutlich erhöht werden.

Die Erfindung wird nachfolgend anhand bevorzugter Ausführungsbeispiele unter Bezugnahme auf die beigefügten Zeichnungen näher erläutert. Es zeigen:
- Fig. 1: Eine Seitenansicht eines Ausführungsbeispiels eines Flurförderzeugs mit einem System zur Inspektion eines Lagers gemäß der Erfindung;
- Fig. 2: Eine schematische Darstellung der Abtastebene des Laserscanners aus Figur 1 ;
- Fig. 3: Eine schematische Darstellung der zur Inspektion eines Lagers mit dem Ausführungsbeispiel aus Figur 1 vorgesehenen Komponenten;
- Fig. 4: Eine schematische Darstellung einer Detektion eines Schadens eines Lagers mit dem System aus Figur 1;
- Fig. 5: Eine schematische Darstellung einer Detektion einer Unregelmäßigkeit eines Lagers mit dem Ausführungsbeispiel aus Figur 1;
- Fig. 6: Eine schematische Darstellung einer Strategie eines Einlagerungsvorgangs in Kombination mit dem Ausführungsbeispiel aus Figur 1;
- Fig. 7: Eine schematische Darstellung einer anderen Strategie eines Einlagerungsvorgangs in Kombination mit dem Ausführungsbeispiel aus Figur 1.

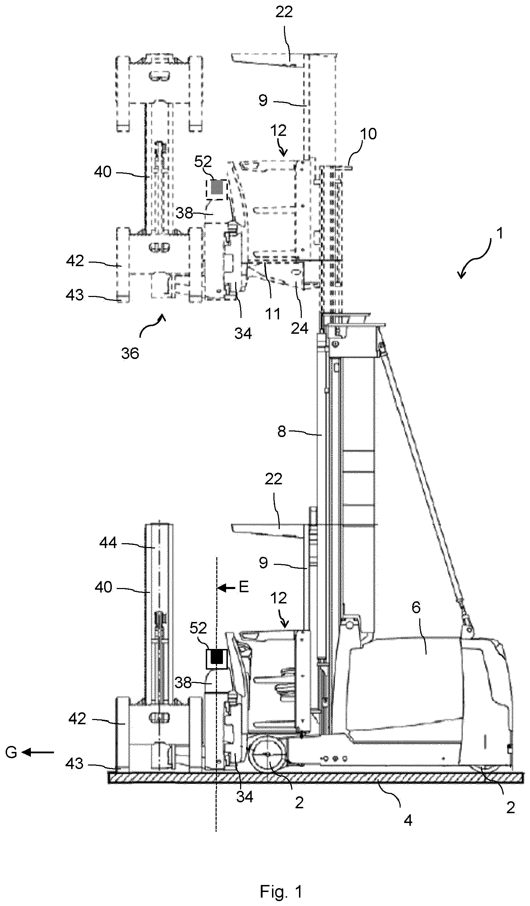

Figur 1 zeigt in einer Seitenansicht ein Ausführungsbeispiel eines Flurförderzeugs 1 mit einem System zur Inspektion eines Lagers gemäß der Erfindung, wobei in diesem Ausführungsbeispiel das Flurförderzeug ein Hochregalstapler ist, der als Dreiseitenstapler ausgebildet ist.

Das Flurförderzeug 1 ist mit an nicht gezeigten Radaufhängungen angebrachten Rädern 2 ausgerüstet, die auf dem Fahruntergrund 4 aufstehen. Die Radaufhängungen sind wiederum an einem Fahrzeugkörper 6 angebracht, an dem ebenfalls ein aufrecht stehend befestigtes Hubgerüst 8 angebracht ist. Das Hubgerüst 8 ist mehrteilig teleskopisch ausfahrbar ausgebildet, wie dies in Figur 1 anhand der mit gestrichelten Linien gezeigten Ausfahrstellung zu erkennen ist. An der am weitesten ausfahrbaren Teleskopstufe 10 des Hubgerüsts 8 ist eine Tragstruktur 9 als Fahrerplatzträger vertikal verfahrbar angebracht. Die Tragstruktur 9 weist eine vom Hubgerüst 8 in Hauptfahrrichtung G des Flurförderzeugs nach vorn abstehende Kragträgeranordnung 24 als Ausleger auf, die eine Plattform 11 eines Fahrerplatzes 12 an deren Unterseite abstützt und die an ihrem abstehenden Ende einen Seitenschubrahmen 34 trägt.

Der Fahrerplatz 12 ist als hebbare Fahrerkabine ausgestaltet, deren Rahmen mit der Fahrerplatzplattform 11 als Kabinenboden eine Rückwand, Seitenwände und ein Fahrerschutzdach 22 aufweist. In Hauptfahrrichtung G vor dem Fahrerplatz 12 ist an der Kragträgeranordnung 24 der Seitenschubrahmen 34 befestigt. Der Seitenschubrahmen 34 ist Teil einer an sich bekannten Lasttragbaugruppe 36, die ferner ein seitlich quer zur Geradeausfahrrichtung G verschiebbar an dem Seitenschubrahmen 34 angeordnetes Seitenschubgerät 38 in der Form als Schwenkschubgerät 38 mit einem vorne daran angeordneten Zusatzhubgerüst 40 aufweist, an welchem als Lastträgerelement eine Lasttraggabel 42 mit einer Gabelträgeranordnung vertikal verfahrbar ist. Das Zusatzgerüst 40 ist zusammen mit der Lasttraggabel 42 um die Hochachse 44 zwischen der in Figur 1 gezeigten Stellung mit seitlicher Ausrichtung der Lasttraggabel 42 bzw. deren Lasttragzinken 43 (Querausrichtung nach links in Bezug auf die Geradeausfahrrichtung G) und einer Stellung mit entgegengesetzter seitlicher Ausrichtung (Querausrichtung rechts) der Lasttragzinken 43 schwenkbar.

Sämtliche dem Hubgerüst 8 und der Lasttragbaugruppe 36 zugeordneten Arbeitsfunktionen sind mittels einer nicht gezeigten Hydraulikvorrichtung betreibbar.

Das Flurförderzeug 1 umfasst ein System zur Inspektion eines Hochregallagers, wobei das System einen Laserscanner 52 und eine Recheneinheit 60 umfasst, welche in Figur 1 nicht gezeigt ist. Das System dient vorzugsweise als eine Erweiterung des Flurförderzeugs, wobei die Recheneinheit 60 entweder einem bereits bestehenden Bordcomputer des Flurförderzeugs 1 zugeordnet sein kann oder durch ein separat ausgebildetes Computersystem vorgesehen sein kann. Der Laserscanner 52 ist an dem Flurförderzeug vorzugsweise an einem Anbauteil befestigt, der direkt oder indirekt mit dem Hubgerüst 8 beweglich verbunden ist, wobei die Höhe des Laserscanners 52 in Bezug auf den Fahruntergrund 4 mit einer Arbeitsfunktion des Flurförderzeugs 1 einstellbar ist. Der Laserscanner 52 ist vorzugsweise oben an dem Seitenschubgerät 38 fest angebracht. Alternative Stellen wie z.B. das Fahrerschutzdach 22 sind für das Anbringen des Laserscanners 52 ebenfalls geeignet. Der Laserscanner 52 ist dafür eingerichtet, einen Scanvorgang in einer Ebene E im Wesentlichen senkrecht zur Hauptfahrtrichtung des Flurförderzeugs G durchzuführen.

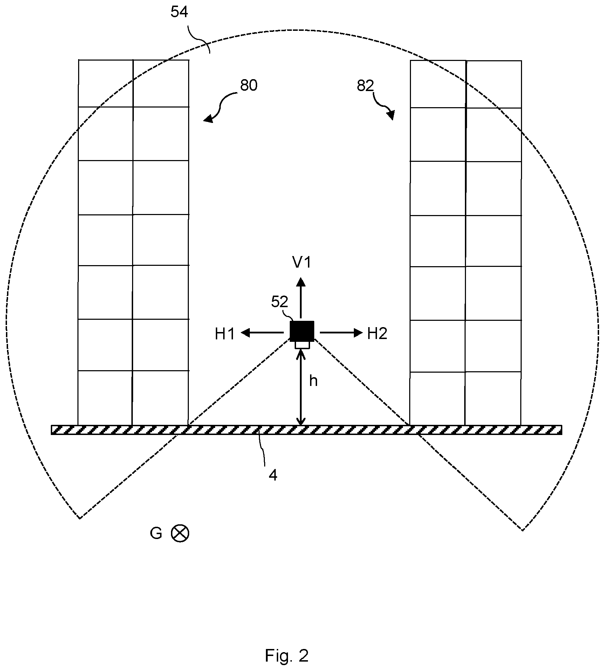

Figur 2 zeigt die Scanebene E des Laserscanners in einer Ansicht in Richtung der Hauptfahrtrichtung G des Flurförderzeugs. Der Laserscanner 52 weist vorzugsweise einen durchgehenden Abtastbereich 54 von mehr als 180° auf und ist momentan auf einer bestimmten Höhe h in Bezug auf den Fahrunterboden 4 derart positioniert, dass Abtastrichtungen des Laserscanners 52 die beiden horizontalen Richtungen H1 und H2 sowie die vertikale Richtung nach oben V1 umfassen. Somit können Regalfronten der Regale 80 und 82 auf beiden Seiten des Flurförderzeugs 1 mit einer einzelnen Messfahrt erfasst werden. Zudem kann der Abtaststrahl des Laserscanners 52 Regalfronten von dem Regalboden bis zu den obersten Etagen der Regale 80 und 82 erreichen, so dass alle Lagerplätze auf beiden Seiten der Fahrspur auf einmal erfasst werden können. Das System kann daher besonders vorteilhaft und zeitsparend sein, um z.B. eine Inventur eines Lagers durchzuführen oder einen Belegungszustand der Lagerplätze zu überprüfen.

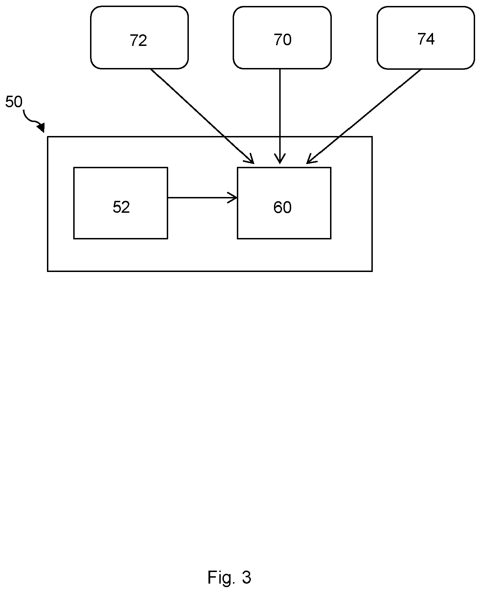

Figur 3 zeigt grob schematisch den Aufbau des Systems 50 zur Inspektion eines Lagers, das im Flurförderzeug 1 aus Figur 1 eingesetzt wird. Das System 50 umfasst den Laserscanner 52 und die Recheneinheit 60, wobei der Laserscanner 52 dafür eingerichtet ist, die Umgebung abzutasten, um Abtastdaten zu erzeugen, und die Recheneinheit 60 dafür eingerichtet ist, die Abtastdaten zu erhalten und darauf basierend dreidimensionale Daten der Umgebung zu konstruieren. Da die Scanebene E senkrecht zur Hauptfahrtrichtung des Flurförderzeugs G steht, werden zusätzlich Daten über die räumliche Position bzw. die Bewegungsrichtung des Laserscanners 52 benötigt, um dreidimensionale Daten der Umgebung zu konstruieren. Erfindungsgemäß ist die Recheneinheit 60 dafür eingerichtet, Odometriedaten des Flurförderzeugs 70 zu erhalten, wobei die Odometriedaten des Flurförderzeugs 70 Positions- und Orientierungsdaten des Fahrzeugs umfassen, die vorzugsweise mittels seines Vortriebsystems ermittelt werden können.

Da der Laserscanner 52 an dem Flurförderzeug 1 fest angebracht ist, ergibt sich die Bewegungsrichtung des Laserscanners 52 aus der Fahrtrichtung des Flurförderzeugs 1 und somit direkt aus den Odometriedaten des Flurförderzeugs 70. Um die räumliche Position des Laserscanners bei der Abtastung zu bestimmen, können neben den Odometriedaten 70 noch andere Daten relevant sein und hinzugezogen werden.

Da der Laserscanner 52 vorzugsweise an einem Anbauteil des Flurförderzeugs 1 fest angebracht ist, der direkt oder indirekt mit dem Hubgerüst 8 beweglich verbunden ist, kann die Höhe des Laserscanners h in Bezug auf den Fahruntergrund 4 mit einer Arbeitsfunktion, beispielsweise einem Heben oder einem Senken eines Lasttragelements des Flurförderzeugs 1, eingestellt werden. Zudem kann die horizontale Position des Laserscanners mittels einer Arbeitsfunktion, z.B. einem Schwenken eines Lasttragelements, ebenfalls geändert werden. Somit ändert sich die relative Position des Laserscanners 52 in Bezug auf den Körper 6 des Flurförderzeugs 1. Die der Arbeitsfunktion entsprechenden Daten 72 in Bezug auf beispielsweise die Positionierungsdaten eines Anbauteils können beispielsweise aus einer Steuereinheit des Flurförderzeugs und/oder aus einem Lagerverwaltungssystems erhalten werden und sind vorzugsweise bei der Ermittlung der räumlichen Position des Laserscanners 52 hinzuzuziehen.

Weitere Daten 74 beispielsweise in Bezug auf Umgebungseinflüsse wie Bodenunebenheiten oder Referenzdaten für die Lokalisierung des Flurförderzeugs können ebenfalls für die Ermittlung der räumlichen Position des Laserscanners relevant sein, wobei solche weiteren Daten 70 mit verschiedenen bereits vorhandenen oder gesondert aufgebauten sensorbasierten Lösungen erhalten werden können.

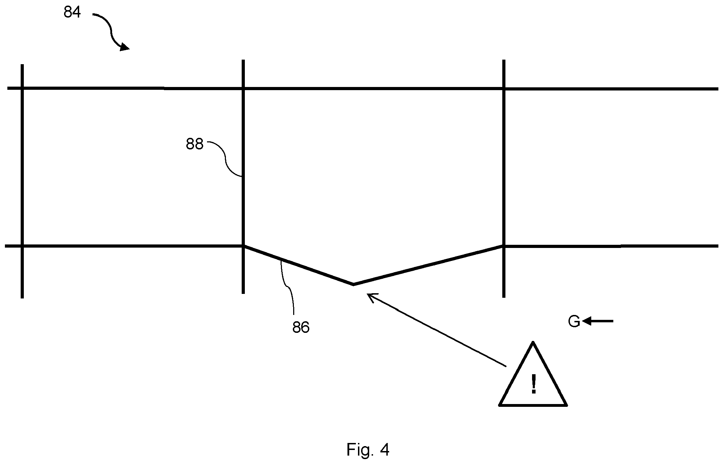

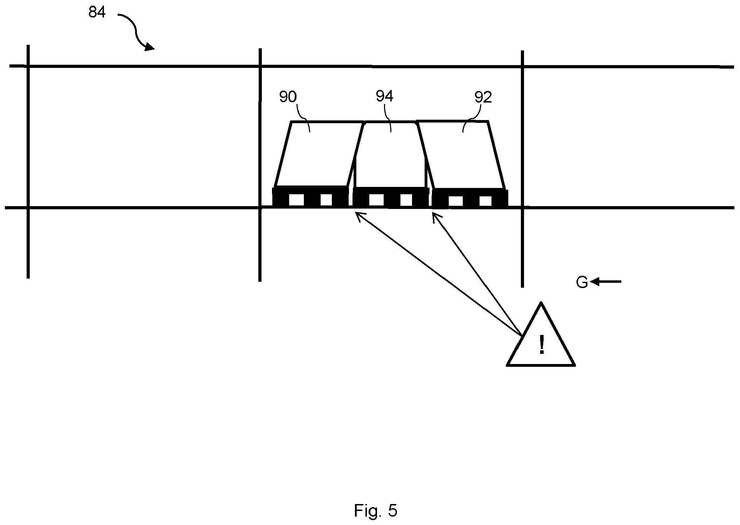

Auf Basis der Abtastdaten, der Odometriedaten des Flurförderzeugs sowie ggf. weiterer oben genannter Daten konstruiert die Recheneinheit 60 dreidimensionale Daten der Umgebung in Form einer Punktewolke. Durch eine geeignete Bildverarbeitung kann die Recheneinheit 60 verschiedene Lagerelemente aus der konstruierten Punktewolke erkennen und hierauf basierend dreidimensionale Daten der einzelnen erkannten Lagerelemente ermitteln. Auf Basis eines Abgleiches der dreidimensionalen Daten der einzelnen detektierten Lagerelemente mit entsprechenden Daten aus dem Lagerverwaltungssystem und/oder mit vordefinierten Referenzdaten ist die Recheneinheit 60 in der Lage, Schäden oder Unregelmäßigkeiten eines Lagers automatisch zu erkennen. In Figur 4 und in Figur 5 wird jeweils ein Beispiel hierfür anschaulich dargestellt.

Figur 4 zeigt einen Teil eines Regals 84, welches eine Mehrzahl von Horizontalträgern 86 und Vertikalträgern 88 umfasst. Es ist aus Figur 4 ersichtlich, dass ein Regalschaden in Form eines verformten Horizontalträgers 86 entstanden ist. Wenn das Flurförderzeug 1 mit dem System 50 an dem betroffenen Lagerbereich vorbeifährt, kann die Recheneinheit 60 durch die konstruierte Punktewolke und entsprechende Bildverarbeitungsalgorithmen erkennen, dass der Horizontalträger 86 verformt ist. Hierauf basierend kann die Recheneinheit 60 eine Anweisung ausgeben, um eine Reparatur oder ein Ersetzen des Horizontalträgers 86 zu veranlassen.

Figur 5 zeigt ebenfalls einen Teil eines Regals 84 mit Horizontalträgern und Vertikalträgern. Es ist aus Figur 5 ersichtlich, dass zwei eingelagerte Ladeeinheiten 90 und 92 derart verformt sind, dass die Ladeeinheit 94 von den beiden anderen zusammengedrückt wird und dadurch ebenfalls verformt worden ist. Falls eine Auslagerung der Ladeeinheit 94 mit einem automatisierten Flurförderzeug ohne Berücksichtigung dieser Unregelmäßigkeit stattfinden würde, könnten die benachbarten Ladeeinheiten 90 und 92 aufgrund einer entstehenden Reibungskraft schlimmstenfalls aus dem Regal fallen und einen Unfall verursachen.

Mit der Lösung gemäß der Einfindung kann diese Unregelmäßigkeit allerdings vor der Auslagerung der Ladeeinheit 94 erkannt werden, um einen möglichen Unfall zu vermeiden. Bei einem Vorbeifahren des Flurförderzeugs 1 mit dem System 50 an dem betroffenen Lagerbereich kann die Recheneinheit 60 detektieren, dass der Abstand zwischen den Ladeeinheiten 90 und 94 sowie der Abstand zwischen den Ladeeinheiten 92 und 94 jeweils unter einem vordefinierten erlaubten Referenzwert liegt, welcher beispielsweise in dem Lagerverwaltungssystem hinterlegt ist. Bei Erkennung dieser Unregelmäßigkeiten wird die Recheneinheit 60 eine entsprechende Anweisung ausgeben, so dass eine Auslagerung der Ladeeinheit 94 nicht stattfindet, bis diese Unregelmäßigkeit behoben ist.

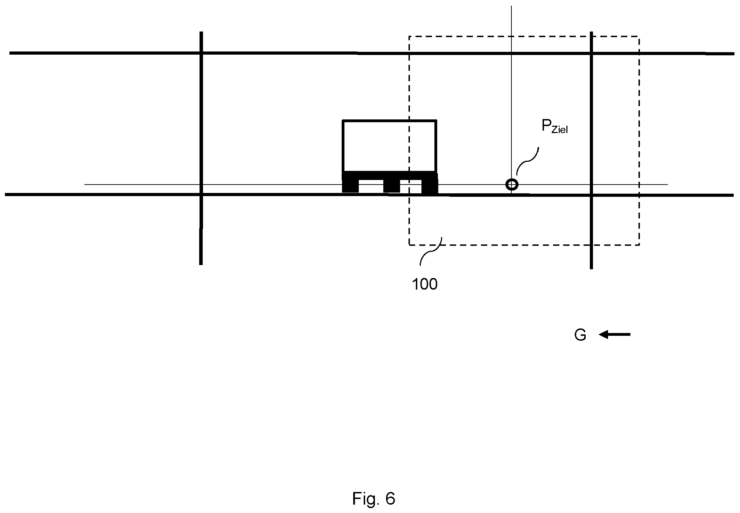

Fig. 6 zeigt schematisch eine Strategie eines Einlagerungsvorgangs in Kombination mit dem Ausführungsbeispiel aus Figur 1. Das Flurförderzeug 1 erhält vorzugsweise einen Transportauftrag von einem Lagerverwaltungssystem, welcher angibt, auf welchen Ziellagerplatz eine Einlagerung einer Ladung stattfinden soll. Darauf basierend führt ein Navigationssystem des Flurförderzeugs das Flurförderzeug 1 zu einer Zielposition, wobei die Lasttraggabel 42 des Flurförderzeugs ggf. auch zu einer Zielposition durch ein Steuerungssystem des Flurförderzeugs mit eingestellt wird, damit eine Einlagerung der Ladung auf den Ziellagerplatz durchgeführt werden kann.

Vor Erreichen der Zielposition des Flurförderzeugs wird das System zur Inspektion des Lagers 50 vorzugsweise aktiviert und die Geschwindigkeit des Flurförderzeugs ggf. reduziert, sodass der Ziellagerplatz bei einem Vorbeifahren des Flurförderzeugs an dem Ziellagerplatz in Richtung G gescannt werden kann und dreidimensionale Daten des Ziellagerplatzes darauf basierend konstruiert werden können. Der Scanbereich 100 ist durch gestrichelte Linien markiert, wobei in Figur 6 der komplette Ziellagerplatz mit dazugehörigen Lagerträgern sowie benachbarten Waren gescannt wird. Auf Basis der konstruierten dreidimensionalen Daten des Scanbereiches 100 kann die Recheneinheit 60 des Systems die von der Lasttraggabel 42 anzufahrende Soll-Zielposition P_{Ziel} für die Einlagerung ermitteln, wobei in der gezeigten Ausführungsform die Position P_{Ziel} einem Mittelpunkt in Breitenrichtung des Ziellagerplatzes entspricht.

Falls eine Abweichung zwischen der ermittelten Zielposition P_{Ziel} und der vorgegebenen Ist-Zielposition der Lasttraggabel 42 besteht, wird die vorgegebene Ist-Zielposition vorzugsweise durch die Soll-Zielposition P_{Ziel} ersetzt. Darauffolgend kann die aktualisierte Ist-Zielposition des Lagerplatzes angefahren und somit die Einlagerung durchgeführt werden.

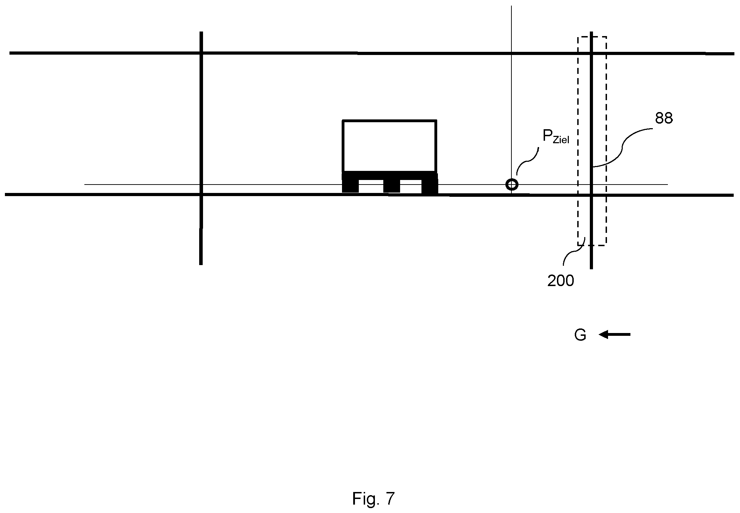

Die oben beschriebene Strategie setzt allerdings voraus, dass das Flurförderzeug 1 an dem kompletten Ziellagerplatz vorbeifährt und somit der komplette Ziellagerplatz gescannt wird. Um eine Einlagerung nach dem Scanvorgang zu ermöglichen, muss das Flurförderzeug 1 um eine Strecke in die der Hauptfahrtrichtung G des Flurförderzeugs entgegengesetzte Richtung zurückfahren, damit die Lasttraggabel 42 die ggf. aktualisierte Ist-Zielposition anfahren kann. Um dies zu vermeiden, kann beispielsweise eine alternative Strategie zur Unterstützung eines Einlagerungsvorgangs, die in Fig. 7 illustriert ist, eingesetzt werden.

Im Gegensatz zu der in Fig. 6 dargestellten Strategie wird beim Erreichen des Ziellagerplatzes beispielsweise nur ein Regalträger, in diesem Fall der in Fig. 7 gezeigte Vertikalträger 88, gescannt und erkannt (Siehe Scanbereich 200). Darauf basierend kann das Steuerungssystem des Flurförderzeugs zusammen mit Daten über die Abmessungen des Ziellagerfaches, die lokal oder extern (wie z.B. im Lagerverwaltungssystem) hinterlegt sind, die Soll-Zielposition P_{Ziel} berechnen. Zwar ergibt sich mit der in Fig. 7 dargestellten Strategie der Nachteil, dass ein Teil des Ziellagerplatzes nicht gescannt werden kann, dieser Nachteil kann jedoch beispielsweise durch ein Hinzuziehen von weiteren Sensoren, wie beispielsweise einer Kamera, kompensiert werden, die den Lagerplatz und/oder die Umgebung in der Nähe des Lagerplatzes bei dem Einlagerungsvorgang mit erfasst.

Außer den in Fig. 6 und Fig. 7 dargestellten Strategien kann der Fachmann je nach Bedarf auch andere Strategien für Einlagerungs- oder Auslagerungsvorgänge in Kombination mit dem Flurförderzeug und/oder dem Verfahren der vorliegenden Erfindung einsetzen.
Ferner ist es zu anzumerken, dass erfindungsgemäß alternativ zu dem in Figur 1 dargestellten manuell bedienten Flurförderzeug ebenfalls ein teilautomatisiertes Flurförderzeug oder ein vollautomatisiertes fahrerloses Flurförderzeug zum Einsatz kommen könnte. Bei einem vollautomatisierten spurgeführten Flurförderzeug kann hierbei beispielsweise auf den in Figur 1 dargestellten Fahrerplatz 12 verzichtet werden.

## Patentansprüche

1. System zur Inspektion eines Lagers (50), umfassend:
einen Laserscanner (52), welcher an einem Flurförderzeug (1) befestigbar ist und dafür eingerichtet ist, einen Scanvorgang in einer Ebene im Wesentlichen senkrecht zur Hauptfahrtrichtung des Flurförderzeugs (G) durchzuführen, um eine Umgebung eines Lagers auf wenigstens einer Seite, vorzugsweise beiden Seiten des Flurförderzeugs abzutasten und darauf basierend Abtastdaten zu erzeugen,
eine Recheneinheit (60), welcher dafür eingerichtet ist, die Abtastdaten zu erhalten, sowie Daten über die absolute Position und/oder die relative Positionsänderung des Flurförderzeugs, oder Daten, aus denen sich eine oder mehrere dieser Größen herleiten lassen, zu erhalten,
wobei die Recheneinheit (60) ferner dafür eingerichtet ist, auf Basis der Abtastdaten sowie der Daten über die absolute Position und/oder die relative Positionsänderung des Flurförderzeugs dreidimensionale Daten der Umgebung zu konstruieren,
**dadurch gekennzeichnet, dass** der Laserscanner (52) derart an dem Flurförderzeug befestigbar ist, dass er seine Scanebene (E) im Wesentlichen senkrecht zur Hauptfahrtrichtung des Flurförderzeugs (G) aufweist.

2. System nach Anspruch 1, wobei die Recheneinheit (60) ferner dafür eingerichtet ist, Odometriedaten des Flurförderzeugs (70) zu erhalten, wobei die Daten über die absolute Position und/oder die relative Positionsänderung des Flurförderzeugs aus den Odometriedaten des Flurförderzeugs (70) herzuleiten sind.

3. System nach Anspruch 1 oder Anspruch 2, wobei der Laserscanner (52) Abtastrichtungen aufweist, die die beiden horizontalen Richtungen (H1 und H2) und die vertikale Richtung nach oben (V1) enthalten.

4. System nach einem der vorhergehenden Ansprüche, wobei die Recheneinheit (60) ferner dafür eingerichtet ist, einzelne Lagerelemente aus den konstruierten dreidimensionalen Daten der Umgebung zu detektieren.

5. System nach einem der vorhergehenden Ansprüche, wobei die Recheneinheit (60) ferner dafür eingerichtet ist, Daten aus einem Lagerverwaltungssystem zu empfangen.

6. System nach Anspruch 4 und Anspruch 5, wobei die Recheneinheit (60) ferner dafür eingerichtet ist, einen Lagerzustand auf Basis eines Abgleiches der dreidimensionalen Daten der einzelnen detektierten Lagerelemente mit entsprechenden Daten aus dem Lagerverwaltungssystem zu überprüfen.

7. System nach einem der Ansprüche 4 bis 6, wobei die Recheneinheit (60) ferner dafür eingerichtet ist, einen Lagerzustand auf Basis eines Abgleichs der dreidimensionalen Daten der einzelnen detektierten Lagerelemente mit vordefinierten Referenzdaten zu überprüfen.

8. System nach Anspruch 6 oder Anspruch 7, wobei die Recheneinheit (60) ferner dafür eingerichtet ist, den Lagerzustand zu dokumentieren und/oder Anweisungen auf Basis des Lagerzustands auszugeben.

9. Flurförderzeug (1), umfassend ein System (50) nach einem der Ansprüche 1-8.

10. Flurförderzeug (1) nach Anspruch 9, wobei das Flurförderzeug ein spurgeführtes Flurförderzeug ist.

11. Flurförderzeug nach Anspruch 9 oder Anspruch 10, wobei das Flurförderzeug ein Hubgerüst umfasst, wobei der Laserscanner an einem Anbauteil des Flurförderzeugs fest angebracht ist, der direkt oder indirekt beweglich mit dem Hubgerüst verbunden ist, so dass die Höhe des Laserscanners in Bezug auf den Fahruntergrund mit einer Arbeitsfunktion des Flurförderzeugs einstellbar ist.

12. Flurförderzeug (1) nach einem der Ansprüche 9 oder 10, wobei das Flurförderzeug ein Hochregalstapler ist, welcher einen Fahrerplatz (12) mit einem Fahrerschutzdach (22) und/oder eine seitlich quer zur Geradeausfahrrichtung des Staplers (2) hin und her bewegbare Lasttragvorrichtung (36) umfasst, wobei der Laserscanner (60) vorzugsweise an dem Fahrerschutzdach (22) oder an der Lasttragvorrichtung (36) fest angebracht ist.

13. Verfahren zur Inspektion eines Lagers mittels eines Systems (50) nach einem der Ansprüche 1-8, wobei das System (50) gegebenenfalls einem Flurförderzeug (1) nach einem der Ansprüche 9-12 zugeordnet ist, umfassend:
- Abtasten der Umgebung und Erzeugen der Abtastdaten;
- Erfassen von Daten über die absolute Position und/oder die relative Positionsänderung des Flurförderzeugs, oder Daten, aus denen sich eine oder mehrere dieser Größen herleiten lassen;
- Konstruieren von dreidimensionaler Daten der Umgebung auf Basis der Abtastdaten sowie der Odometriedaten des Flurförderzeugs (70).

14. Verfahren nach Anspruch 13, ferner umfassend:
- Erfassen von Odometriedaten des Flurförderzeugs (70), wobei die Daten über die absolute Position und/oder die relative Positionsänderung des Flurförderzeugs aus den Odometriedaten des Flurförderzeugs (70) herzuleiten sind.

15. Verfahren nach Anspruch 13 oder Anspruch 14, ferner umfassend:
- Automatisches Aktivieren des Systems bei Erkennung eines Referenzpunkts.

16. Verfahren nach einem der Ansprüche 13-15, ferner umfassend ein Detektieren der momentanen räumlichen Position des Laserscanners (52), beispielsweise auf Grundlage von extern eingegebenen Daten oder von durch den Laserscanner erfassten Referenzpunkten, wobei das Verfahren ferner auf Basis der räumlichen Position des Laserscanners ein Konstruieren von dreidimensionalen Daten der Umgebung umfasst.

17. Verfahren nach einem der Ansprüche 13-15, wobei das Verfahren ferner umfasst:
- Detektieren einzelner Lagerelemente aus den konstruierten dreidimensionalen Daten der Umgebung.

18. Verfahren nach einem der Ansprüche 13-16, ferner umfassend:
- Empfangen von Daten aus einem Lagerverwaltungssystem.

19. Verfahren nach Anspruch 18, ferner umfassend:
- Überprüfen eines Lagerzustands auf Basis eines Abgleichs der dreidimensionalen Daten der einzelnen detektierten Lagerelemente mit entsprechenden Daten aus dem Lagerverwaltungssystem.

20. Verfahren nach einem der Ansprüche 16 bis 18, ferner umfassend:
- Überprüfen eines Lagerzustands auf Basis eines Abgleichs der dreidimensionalen Daten der einzelnen detektierten Lagerelemente mit vordefinierten Referenzdaten.

21. Verfahren nach Anspruch 19 oder Anspruch 20, ferner umfassend:
- Erkennen von Schäden oder Unregelmäßigkeiten des Lagerzustands.

22. Verfahren nach einem der Ansprüche 19-21, ferner umfassend:
- Ausgeben von Anweisungen auf Basis des Lagerzustands und ggf. Wiederherstellen eines ordnungsgemäßen Lagerzustands.

23. Verfahren nach einem der Ansprüche 13-22, wobei das Verfahren während eines Einlagerungs- oder Auslagerungsvorgangs durchgeführt wird.

## Claims

1. A system for inspecting a warehouse (50) comprising:
a laser scanner (52) attachable to an industrial truck (1) and adapted to scan in a plane substantially perpendicular to the industrial truck's main direction of travel (G) in order to scan an environment of a warehouse on at least one side, preferably both sides, of the industrial truck and to generate scan data based thereon,
a computing unit (60) that is adapted to receive the scan data and data on the absolute position and/or relative position change of the industrial truck, or data from which one or more of these variables can be derived,
wherein the computing unit (60) is further adapted to construct three-dimensional data of the environment based on the scan data and data on the absolute position and/or relative position change of the industrial truck,
**characterized in that** the laser scanner (52) is attachable to the industrial truck in such a manner that it has its scanning plane (E) substantially perpendicular to the main direction of travel of the industrial truck (G).

2. System according to claim 1, wherein the computing unit (60) is adapted to receive odometry data of the industrial truck (70), data on the absolute position and/or relative position change of the industrial truck being derived from the odometry data of the industrial truck (70).

3. System according to claim 1 or claim 2, wherein the laser scanner (52) has scanning directions that include the two horizontal directions (H1 and H2) and the vertical upward direction (V1).

4. System according to one of the preceding claims, wherein the computing unit (60) is further adapted to detect individual storage elements from the constructed three-dimensional data of the environment.

5. System according to one of the preceding claims, wherein the computing unit (60) is further adapted to receive data from a warehouse management system.

6. System according to claim 4 and claim 5, wherein the computing unit (60) is further adapted to check a storage condition based on a comparison of the three-dimensional data of the individual detected storage elements with corresponding data from the warehouse management system.

7. System according to one of claims 4 to 6, wherein the computing unit (60) is further adapted to check a storage condition based on a comparison of the three-dimensional data of the individual detected storage elements with predefined reference data.

8. System according to claim 6 or claim 7, wherein the computing unit (60) is further adapted to document the storage condition and/or output instructions based on the storage condition.

9. Industrial truck (1) comprising a system (50) according to one of claims 1-8.

10. Industrial truck (1) according to claim 9, wherein the industrial truck is a trackguided industrial truck.

11. Industrial truck according to claim 9 or claim 10, wherein the industrial truck comprises a mast, the laser scanner being fixed to an attachment of the industrial truck that is directly or indirectly movably connected to the mast, the height of the laser scanner being adjustable in relation to the driving surface with a work function of the industrial truck.

12. Industrial truck (1) according to one of claims 9 or 10, wherein the industrial truck is preferably a high-bay stacker comprising an operator's station (12) with an overhead guard (22) and/or a load carrying apparatus (36) that can be moved laterally back and forth, transverse to the truck's straight-ahead direction of travel (2), the laser scanner (60) preferably being fixedly attached to the overhead guard (22) or to the load carrying apparatus (36).

13. A method for inspecting a warehouse by means of a system (50) according to one of claims 1-8, wherein the system (50) can be assigned to an industrial truck (1) according to one of claims 9-12, comprising:
- Scanning the environment and generating scan data;
- Capturing data on the absolute position and/or relative position change of the industrial truck, or data from which one or more of these variables can be derived;
- Constructing three-dimensional data of the environment based on the scan data and odometry data of the industrial truck (70).

14. Method according to claim 13, further comprising:
- Capture of odometry data of the industrial truck (70), data on the absolute position and/or relative position change of the industrial truck being derived from the odometry data of the industrial truck (70).

15. Method according to claim 13 or claim 14, further comprising:
- Automatic activation of the system when a reference point is detected.

16. Method according to one of claims 13-15, further comprising detection of the current spatial position of the laser scanner (52), for example based on externally input data or reference points detected by the laser scanner, the method further including the construction of three-dimensional data of the environment based on the spatial position of the laser scanner.

17. Method according to one of claims 13-15, wherein the method further comprises:
- Detection of individual storage elements from the constructed three-dimensional data of the environment.

18. Method according to one of claims 13-16, further comprising:
- Reception of data from a warehouse management system.

19. Method according to claim 18, further comprising:
- Inspection of a storage condition based on a comparison of the three-dimensional data of the individual detected storage elements with corresponding data from the warehouse management system.

20. Method according to one of claims 16 to 18, further comprising:
- Inspection of a storage condition based on a comparison of the three-dimensional data of the individual detected storage elements with predefined reference data.

21. Method according to claim 19 or claim 20, further comprising:
- Detection of damage or irregularities of the storage condition.

22. Method according to one of claims 19-21, further comprising:
- Output of instructions based on the storage condition and, where necessary, re-establishing a proper storage condition.

23. Method according to one of claims 13-22, wherein the method is carried out during a deposit or retrieval operation.

## Revendications

1. Système d'inspection d'un entrepôt (50), comprenant :
un scanner laser (52) qui peut être fixé à un chariot de manutention (1) et qui est adapté pour effectuer une opération de balayage dans un plan sensiblement perpendiculaire à la direction principale de déplacement du chariot de manutention (G), afin de balayer un environnement d'un entrepôt sur au moins un côté, de préférence les deux côtés du chariot de manutention, et de générer des données de balayage sur cette base,
une unité de calcul (60) qui est adaptée pour obtenir les données de balayage ainsi que des données sur la position absolue et/ou le changement de position relative du chariot de manutention, ou des données à partir desquelles on peut déduire une ou plusieurs de ces grandeurs, dans lequel l'unité de calcul (60) est en outre adaptée pour construire des données tridimensionnelles de l'environnement sur la base des données de balayage ainsi que des données sur la position absolue et/ou le changement de position relative du chariot de manutention,
**caractérisé en ce que** le scanner laser (52) peut être fixé sur le chariot de manutention de telle sorte qu'il présente son plan de balayage (E) sensiblement perpendiculaire à la direction principale de déplacement du chariot de manutention (G).

2. Système selon la revendication 1, dans lequel l'unité de calcul (60) est en outre adaptée pour obtenir des données odométriques du chariot de manutention (70), dans lequel les données relatives à la position absolue et/ou au changement de position relative du chariot de manutention sont déduites des données odométriques du chariot de manutention (70).

3. Système selon la revendication 1 ou la revendication 2, dans lequel le scanner laser (52) comporte des directions de balayage comprenant les deux directions horizontales (H1 et H2) et la direction verticale vers le haut (V1).

4. Système selon l'une des revendications précédentes, dans lequel l'unité de calcul (60) est en outre adaptée pour détecter des éléments d'entrepôt individuels à partir des données tridimensionnelles construites de l'environnement.

5. Système selon l'une des revendications précédentes, dans lequel l'unité de calcul (60) est en outre adaptée pour recevoir des données provenant d'un système de gestion d'entrepôt.

6. Système selon la revendication 4 et la revendication 5, dans lequel l'unité de calcul (60) est en outre adaptée pour vérifier un état d'entrepôt sur la base d'une comparaison des données tridimensionnelles de chaque élément d'entrepôt détecté avec des données correspondantes provenant du système de gestion d'entrepôt.

7. Système selon l'une des revendications 4 à 6, dans lequel l'unité de calcul (60) est en outre adaptée pour vérifier un état d'entrepôt sur la base d'une comparaison des données tridimensionnelles de chaque élément d'entrepôt détecté avec des données de référence prédéfinies.

8. Système selon la revendication 6 ou la revendication 7, dans lequel l'unité de calcul (60) est en outre adaptée pour documenter l'état d'entrepôt et/ou émettre des instructions sur la base de l'état d'entrepôt.

9. Chariot de manutention (1) comprenant un système (50) selon l'une des revendications 1 à 8.

10. Chariot de manutention (1) selon la revendication 9, dans lequel le chariot de manutention est un chariot de manutention guidé.

11. Chariot de manutention selon la revendication 9 ou la revendication 10, dans lequel le chariot de manutention comprend un mât de levage, dans lequel le scanner laser est monté fixement sur une pièce montée du chariot de manutention, qui est reliée directement ou indirectement de manière mobile au mât de levage, de sorte que la hauteur du scanner laser est réglable par rapport au sol de circulation avec une fonction de travail du chariot de manutention.

12. Chariot de manutention (1) selon l'une des revendications 9 ou 10, dans lequel le chariot de manutention est un chariot pour rayonnages hauts comprenant un poste de conduite (12) avec un toit de protection du conducteur (22) et/ou un dispositif de support de charge (36) mobile latéralement en va-et-vient transversalement à la direction de déplacement en ligne droite du chariot (2), dans lequel le scanner laser (60) est de préférence monté fixe sur le toit de protection du conducteur (22) ou sur le dispositif de support de charge (36).

13. Procédé d'inspection d'un entrepôt au moyen d'un système (50) selon l'une des revendications 1 à 8, dans lequel ledit système (50) est éventuellement associé à un chariot de manutention (1) selon l'une des revendications 9 à 12, comprenant :
- Balayer l'environnement et générer des données de balayage ;
- Acquérir des données relatives à la position absolue et/ou au changement de position relative du chariot de manutention, ou des données à partir desquelles une ou plusieurs de ces grandeurs peuvent être déduites ;
- Construire des données tridimensionnelles de l'environnement sur la base des données de balayage ainsi que des données odométriques du chariot de manutention (70).

14. Procédé selon la revendication 13, comprenant en outre :
- Acquérir des données odométriques du chariot de manutention (70), dans lequel les données relatives à la position absolue et/ou au changement de position relative du chariot de manutention sont déduites des données odométriques du chariot de manutention (70).

15. Procédé selon la revendication 13 ou la revendication 14, comprenant en outre :
- Activation automatique du système lors de la détection d'un point de référence.

16. Procédé selon l'une des revendications 13 à 15, comprenant en outre une détection de la position spatiale instantanée du scanner laser (52), par exemple sur la base de données entrées de l'extérieur ou de points de référence détectés par le scanner laser, dans lequel le procédé comprend en outre une construction de données tridimensionnelles de l'environnement sur la base de la position spatiale du scanner laser.

17. Procédé selon l'une des revendications 13 à 15, dans lequel le procédé comprend en outre :
- Détecter des éléments d'entrepôt individuels à partir des données tridimensionnelles construites de l'environnement.

18. Procédé selon l'une des revendications 13 à 16, comprenant en outre :
- Recevoir des données provenant d'un système de gestion d'entrepôt.

19. Procédé selon la revendication 18, comprenant en outre :
- Vérifier un état d'entrepôt sur la base d'une comparaison des données tridimensionnelles de chaque élément d'entrepôt détecté avec des données correspondantes provenant du système de gestion d'entrepôt.

20. Procédé selon l'une des revendications 16 à 18, comprenant en outre :
- Vérifier un état d'entrepôt sur la base d'une comparaison des données tridimensionnelles de chaque élément d'entrepôt détecté avec des données de référence prédéfinies.

21. Procédé selon la revendication 19 ou la revendication 20, comprenant en outre :
- Détecter des dommages ou des irrégularités de l'état d'entrepôt.

22. Procédé selon l'une des revendications 19 à 21, comprenant en outre :
- Émettre des instructions sur la base de l'état d'entrepôt et, le cas échéant, rétablir un état d'entrepôt correct.

23. Procédé selon l'une des revendications 13 à 22, dans lequel le procédé est mis en oeuvre pendant une opération d'entrepôt ou de déstockage.
